Europäisches Patentamt

European Patent Office

Office européen des brevets

(11) Publication number: 0 277 617
A2

# EUROPEAN PATENT APPLICATION

(21) Application number: 88101385.8

(22) Date of filing: 01.02.88

(51) Int. Cl.⁴: B62B 3/00 , B62B 5/00

(30) Priority: 04.02.87 IT 2072987 U

(43) Date of publication of application:
10.08.88 Bulletin 88/32

(84) Designated Contracting States:
AT BE CH DE ES FR GB GR LI NL SE

(71) Applicant: CAMPISUSA FILO S.p.A.
Via Triestina 9
I-30024 Musile di Piave (Venezia)(IT)

(72) Inventor: Zoli, Alberto
Via Botticelli
I-30027 San Dona' Di Piave Venezia(IT)

(74) Representative: Modiano, Guido et al
MODIANO & ASSOCIATI S.A.S. Via Meravigli,
16
I-20123 Milan(IT)

(54) Wheel-mounted base for industrial logistics containers.

(57) The wheel-mounted base consisting of a frame in which tubes (16,17,18,19) are provided for the feet of the removable container-forming walls comprises a frame formed by two pairs of parallel box-like elements (8,9,10,11), one pair (10,11) having a greater cross-section and being traversed by holes (12,13,14,15) in which the tubes (16,17,18,19) for the feet are forced. The box-like elements (8,9) with smaller cross section and having no holes are folded at their corners (25,26,27,28), to align themselves with and insert and weld into the elements (10,11) with greater cross section.

Fig.2

EP 0 277 617 A2

## WHEEL-MOUNTED BASE FOR INDUSTRIAL LOGISTICS CONTAINERS

The present invention relates to a base for so-called "roll" trolleys, on the upper face whereof the vertical container-forming walls are removably applied, and on the lower face whereof the wheels are fixed. Currently wheel-mounted bases are constituted by a substantially quadrangular frame formed by pairs of thick wires, superimposed but spaced, between which hollow tube-like bodies are fixed, acting as seats for the legs of the walls.

As is known, these walls must be easily inserted in, and extracted from, the tubes of the base at the beginning and at the end of each use of the wheel-mounted container, but during the work phase they must not be subject to relevant plays, rotations or movements of their vertical axes with respect to the axes of said tubes. Indeed, the walls are usually high so that even a minimal displacement or play of the wall foot in the tube of the base turns into a large divarication of the individual walls with respect to their vertical plane (orthogonal to the plane of the base). If, as it happens in most cases, the divarications or inclinations of the individual walls are all in the same direction (for example each wall moves outwards) the container is subject to extensive modifications and allows appreciable movements of the items inserted and transported in the containers.

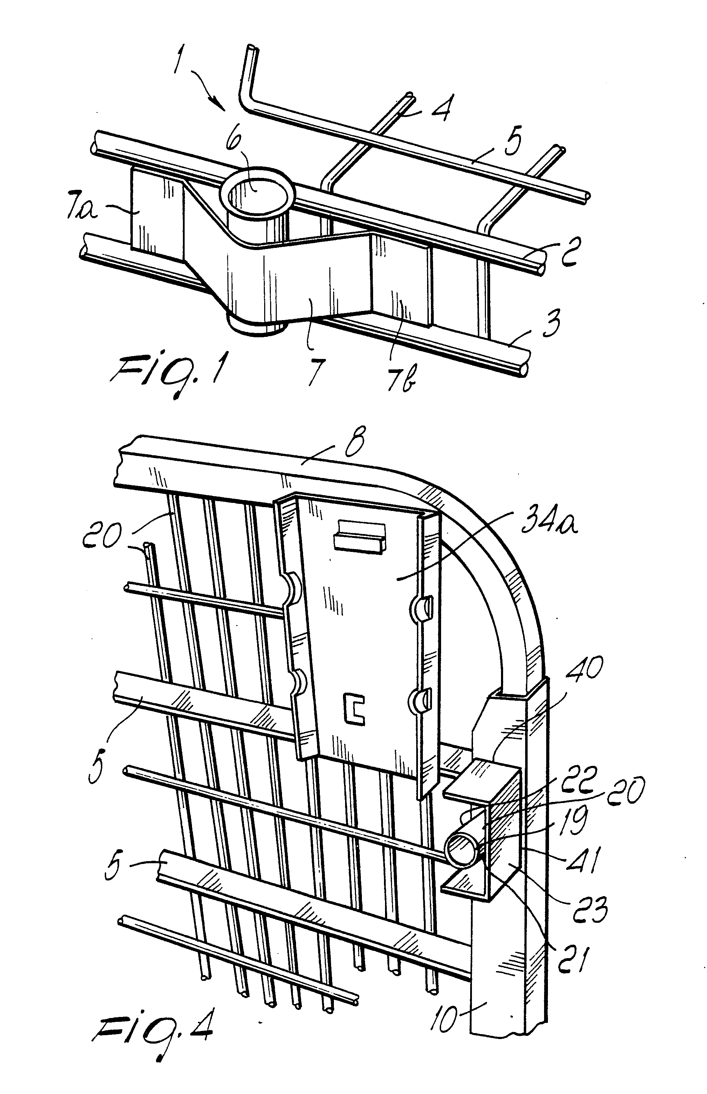

For the sake of clarity, figure 1 illustrates a conventional base portion 1 in schematic perspective, its quadrangular frame being formed by two thick spaced wires 2 and 3 to which are welded the orthogonal wires 4 to which, in turn, are welded the wires 5 parallel to the frame-forming wires 2 and 3. As can be seen, to the outside of the wires 2 and 3 there is welded at least one of the tubes 6 (receiver of one of the feet of the wall, not illustrated) which is protected by a connecting plate 7 with a central curved portion (substantially having a radius of curvature equal to the radius of the tube 6) and with two lateral portions 7a and 7b inserted and welded between the wires 2 and 3. This system is not only per se laborious and complicated, but is furthermore scarcely reliable and gives rise to large displacements, oscillations, plays and the like of the feet of the walls.

The aim of the present invention is to provide a base of roll trolley which does not have the above described disadvantages, which can be more easily manufactured and reliable in use than conventional bases.

This aim and other objects which will be more apparent later is achieved by a base of "roll" trolley comprising a base frame which is downwardly articulated on wheels and is provided with seats for the feet of the removable container-forming walls, characterized in that the frame comprises a sequence of box-like elements, having different cross-section.

Two of said parallel box-like elements located on opposite sides of the frame are provided with seats for the tubes of the feet of said walls and have a greater cross-section than that of the other box-like elements having no seats.

According to another aspect of the invention, the box-like elements with reduced cross-section are folded at the corners at the wheel-holder plates and are connected to the box-like elements with greater cross-section in which they insert themselves for a small portion and weld themselves thereto.

In an advantageous embodiment, the tubes traverse the entire height of the box-like elements with greater cross section, and protrude below the same by a portion which is slightly smaller than the height of the wheels and is welded in several points to a connecting plate in turn welded to the bottom of the tube-holder box-like element.

The different aspects and advantages of the invention will become apparent from the description of a preferred (but non-limitative) embodiment illustrated in the accompanying drawings, wherein:

figure 1, as mentioned, shows a schematic perspective view of a conventional base portion;

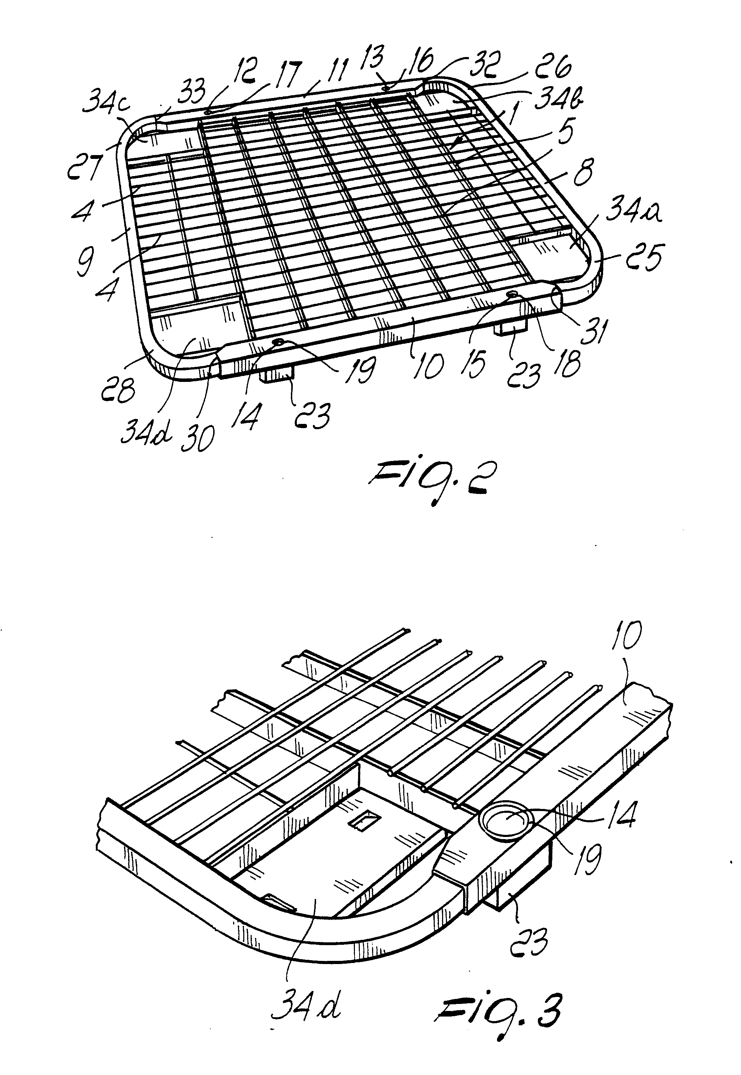

figure 2 is a schematic perspective top view of the "roll" base according to the invention;

figure 3 is an enlarged-scale view of a corner portion of figure 2; and

figure 4 is a view similar to that of figure 2, but from below.

Referring to the cited figures, according to the illustrated embodiment, the frame of the trolley comprises a single box-like element (with square, rectangular, circular, or elliptical cross section) on each side, two of these parallel box-like elements 8,9 having a cross section smaller than that of the other two elements 10-11 in which the holes 12,13,14,15 are provided for the tubes 17,16 respectively 19,18 in which the feet of the walls insert themselves. The holes 12,13;14,15 traverse the entire thickness or height of the elements 10,11 and the tubes 17,16;19,18 are forced therein and protrude below the elements 10 (fig. 4) by a length 22 slightly smaller than the height of the wheels (not illustrated). Around the protruding part of the length 22 of each tube 17,16;19,18 there is arranged a protection connecting plate 23 which is welded along its perimeter 40-41 (42) to the bottom of each element 10,11 and at least at two points 20, 21 to the protruding expansion 22 of each tube.

Obviously, instead of having one box-like element for each side of the frame, it is possible to have a sequence of box-like elements having alternatively different cross-sections, the ends of each element being inserted in the ends of the contiguous elements.

34a,34b,34c,34d indicate the plates for the insertion of the four wheels (not ilustrated) which can be applied for example with the systems according to the Italian patent applications No. 27709 A/79 and No. 216897 A/79 in the name of the same Applicant.

As can be seen from the figures, the box-like elements with smaller cross section 8-9 are curved at 90° at their corners 25, 26, 27 and 28 so as to connect to, and align with, the axes of the box-like elements with greater cross section 10,11 in which they insert for a small portion and to which they weld at the points 30, 31, 32 and 33.

The base according to the invention has been observed to be far more advantageous than conventional ones both during the construction phase and most of all during its use, which is now easier, safer and longer lasting.

The invention, thus conceived, is thus susceptible to numerous modifications and variations, all of which are within the scope of the same inventive concept.

The materials as well as the dimensions of the individual components of the base, may also be the most suitable according to the specific requirements.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Base of "roll" trolley comprising a base frame which is downwardly articulated on wheels and is provided with seats (12,13,14,15,16,17,18,19) for the feet of the removable container-forming walls, characterized in that the frame comprises a sequence of box-like elements (8,9,10,11), having different cross-sections.

2. Base, according to claim 1, characterized in that two of said parallel box-like elements (8,9,10,11) located on opposite sides of said frame are provided with seats (12,13,14,15) for the tubes (16,17,18,19) of the feet of said walls and have a greater cross-section that that of the other box-like elements having no seats.

3. Base, according to claims 1-2, characterized in that said box-like elements (8,9,10,11) have an elongated shape and that those (8,9) having a lesser cross-section have their ends at least partially inserted in said box-like elements (10,11) having greater cross-section, and that said seats for the feet of the lateral removable walls comprise holes (12,13,14,15) provided on said box-like elements (10,11) having greater cross-section.

4. Base, according to claims 1-3, characterized in that the box-like elements (8,9) with lesser cross-section are folded at the corners (25,26,27,28) at the wheel-bearing plates (34) and connect to the box-like elements (10,11) with greater cross-section in which they inset for a small portion and weld themselves thereto.

5. Base, according to the preceding claims, characterized in that said seats for the feet of the lateral walls are constituted by tubes (16,17,18,19) traversing the entire height of the box-like elements (10,11) with greater cross-section, and protrude below the same for a portion which is slightly smaller than the height of the wheels and is welded in several points to a connecting plate (23) in turn welded to the bottom of the tube-holder box-like element (10,11).

Fig.1

Fig.4

Fig. 2

Fig. 3